# EUROPEAN PATENT APPLICATION

(11) **EP 4 193 832 A1**
(43) Date of publication of application: **14.06.2023**
(21) Application number: 21213048.8
(22) Date of filing: 08.12.2021
(51) Int. Cl.: A01K 5/02, G01F 11/24

(54) **APPARATUS AND METHOD FOR FEEDING LIVESTOCK**

(71) Applicant: Trobec, Etienne, 5310 Aische-en-Refail (BE)
(72) Inventor: Trobec, Etienne, 5310 Aische-en-Refail (BE)
(74) Representative: Bittner, Thomas L.

(57) **Abstract**

The present disclosure refers to an apparatus (1) for feeding livestock, comprising: a feed supply unit (10) configured to supply feed and at a first opening (10a); a wheel (11) rotatably arranged at the first opening (10a) and comprising a plurality of dosage cells (16) configured to receive and discharge the feed; a lever (20) configured to be directly moved by a livestock and coupled to the wheel (11) such that a lever rotational movement of the lever (20) is locked with a wheel rotational movement of the wheel (11) in a first rotational direction (21) and unlocked in a second rotational direction (40); and a raising device (30; 80) coupled to the lever (20) and configured to move the lever (20) in the second rotational direction (40). Further, a method for feeding livestock is disclosed.

## Description

The present disclosure refers to an apparatus and a method for feeding livestock.

### Background

Feeding livestock, in particular herbivorous animals, only at few fixed times may result in stress and health issues for the animals. Different feeding devices that are automatic or partially actuated by livestock are known. In particular, document EP 3 235 376 B1 discloses a feeding station for farm animals with a switch unit arranged above the mouthpiece comprising a pivotally suspended operating arm. The operating arm is operated by a snout of a pig.

Document EP 0 395 179 A1 relates to an apparatus for feeding cattle, comprising a dosing device for supplying feed and operated by the head of a cow by means of a lever. The lever is, by means of a rod, connected to a pawl that can cooperate with a ratchet, by means of which a dosing device is operated.

In document DE 8 809 776 U1, a device for feeding animals is disclosed which comprises a trough for receiving multiple feed portions, a discharge member for the feed, a drive for the discharge member, and a device for switching the drive on and off in a time-dependent manner.

Document EP 0 272 054 A1 pertains to a dry fodder supply system for use in piggeries, controlled by a computer and including a fodder machine in which, via a feeder string, fodder can be advanced to a number of feeding stations. Each of the feeding stations comprises a dosage chamber controlled by the computer.

In document DE 2 116 999 A1, an automatic feeder for pigs is disclosed, comprising an elongated storage container with a lower outlet extending over the length of the container above a trough. The outlet is closed by a longitudinally extending cellular wheel that can be rotated only upwards on a trough access side by abutment of the snout of a pig and can be blocked manually or automatically.

Document US 3 304 915 A relates to a rotary diverter for use with a livestock feeder for accurately controlling the amount of feed delivered to either side of a feed bunk.

### Summary

It is an object of the present disclosure to provide an apparatus for feeding livestock that is compact and energy-efficient, while allowing for increased well-being of the livestock.

For solving the problem, an apparatus for feeding livestock according to independent claim 1 is provided. Further, a method for feeding livestock according to independent claim 15 is provided. Further embodiments are disclosed in dependent claims.

According to one aspect, an apparatus for feeding livestock is provided. The apparatus comprises a feed supply unit configured to supply feed and at a first opening; a wheel rotatably arranged at the first opening and comprising a plurality of dosage cells configured to receive and discharge the feed; a lever configured to be directly moved by a livestock and coupled to the wheel such that a lever rotational movement of the lever is locked with a wheel rotational movement of the wheel in a first rotational direction and unlocked in a second rotational direction; and a raising device coupled to the lever and configured to move the lever in the second rotational direction.

According to another aspect, a method for feeding livestock using the apparatus is provided. The method comprises moving, by a livestock, the lever in the first rotational direction such that the wheel is moved in the first rotational direction; discharging the feed from the at least one dosage cell by moving the wheel; and moving, by the raising device, the lever in the second rotational direction from a first lever position to a second lever position.

By moving the lever in the second rotational direction by the raising device (rotating device), which may in particular be a motor, the wheel may be (essentially) unmoved (due to the lever rotational movement being unlocked with the wheel rotational movement in the second rotational direction). Further, by moving the lever in the first rotational direction by the livestock, the wheel may be moved in the first rotational direction (due to the lever rotational movement being locked with the wheel rotational movement in the first rotational direction). As a result from the wheel rotational movement, the feed in the container may be received in the dosage cells facing the container (at the first opening). Further, as a result from the wheel rotational movement, the feed received in the dosage cells may be discharged from the dosage cells. Electric power may only be required for moving the lever, while the momentum for moving the wheel may be provided by the livestock. As a result, electrical energy can be saved. At the same time, a compact design of the apparatus may be achieved.

Within the context of the present disclose, fixing a first apparatus element (such as the wheel) to a second apparatus element may comprise fixing the first apparatus element to the second apparatus element in a rotationally-locked manner, in particular in both a first and a second opposite rotational direction (i.e., the first apparatus element may rotate and/or may stop rotating together with the second apparatus element and vice versa).

As understood herein, being locked in one rotational direction (and unlocked in another rotational direction) may comprise being essentially locked in the one rotational direction including minimal play/backlash.

Within the context of the present disclosure, a value range expressed by the term "between" includes the endpoints of the value range.

As understood herein, the lever being configured to be directly moved by the livestock may comprise the lever being configured to be moved by the livestock in an unmediated way. I.e., the lever may be configured to be moved by the livestock without an additional element not part of the lever mediating the movement by the livestock.

The lever may be configured to be directly moved by the livestock in the first rotational direction. In particular, the lever may be configured to be directly moved by the livestock only in the first rotational direction. The second rotational movement may be opposite to the first rotational movement. The first rotational direction may be towards the apparatus. The second rotational direction may be away from the apparatus. Moving the lever by the livestock may comprise pushing the lever by the livestock. In particular, the lever may be configured to be directly pushed by the livestock.

The livestock may be a herbivorous animal, in particular a horse, a pig, or cattle. The feed may be solid, for example comprising pellets and/or powder and/or plant components.

The feed supply unit may in particular be a container configured to store feed and comprising the first opening.

The container may comprise a conical form, a cylindrical form, or a prism form. Preferably, the container may comprise a frustum form, in particular a square frustum form (truncated pyramid form). The container may also comprise a tubular section, which preferably may comprise the first opening.

The container may for example have a height between 30 cm and 100 cm, preferably between 50 cm and 80 cm. The container may have a bottom width between 8 cm and 30 cm, preferably between 10 cm and 15 cm. The container may have a bottom length between 10 cm and 150 cm, preferably between 10 cm and 15 cm. The container may have a top width between 10 cm and 80 cm, preferably between 25 cm and 55 cm. The container may have a top length between 10 cm and 150 cm, preferably between 25 cm and 55 cm. The container may, e.g., comprise a container volume between 10 L and 200 L, preferably between 20 L and 80 L, more preferably 40 L. The container may comprise a container cover, which may be configured to be opened and closed.

The wheel may comprise a plurality of separator elements separating the dosage cells (from each other). The dosage cells may further be configured to carry the feed, in particular during rotating the wheel.

The lever may be movable in the second rotational direction using a counter-momentum from the feed around the wheel, preferably around the separator elements at the first opening. In particular, the wheel may be arranged at the first opening such that the lever may be movable in the second rotational direction using the counter-momentum from the feed around the wheel.

It may be provided that the counter-momentum is greater than a lever momentum by the lever. Alternatively, a blocking device may be provided which may be configured to block the wheel in the second rotational direction, e.g. using a further pawl.

The wheel may be a blade wheel comprising a plurality of blades between which the dosage cells may be formed. The separator elements may be the blades. The blade wheel may for example comprise between 4 and 10 blades, preferably between 5 and 7 blades.

Alternatively, the wheel may comprise a cylinder with a plurality of recesses forming the dosage cells.

The wheel may comprise between 4 and 10 dosage cells, preferably between 5 and 7 dosage cells. The dosage cells may for example comprise at least one of a cylinder sector form, a truncated cylinder sector form, a polyhedron form, a prism form, and a triangular prism form.

The wheel may be rotatably arranged within a dosage housing. The dosage housing may comprise a receiving opening, at which feed is received in the dosage cells. The receiving opening may be arranged at the first opening. The feed may be received in the dosage cell or dosage cells that are at least partially uncovered at the receiving opening by the wheel rotational movement.

The dosage housing may further comprise a discharging opening, at which feed is discharged from the dosage cells. The feed may be discharged from the dosage cell or dosage cells that are at least partially uncovered at the discharging opening by the wheel rotational movement.

The wheel may be rotatably arranged within the dosage housing in a form-fitting manner. The wheel may be arranged within the dosage housing such that the separator elements / the blades may be constantly spaced from a housing inner wall, e.g., by less than 2 mm, preferably by less than 1 mm. The dosage housing may for example comprise a cylindrical inner wall.

The dosage housing may alternatively comprise an inner wall with a non-cylindrical shape, for example, a cuboid shape. Thus, the wheel may be arranged within the dosage housing in a non-form-fitting manner. In this case, the wheel may be arranged within the dosage housing such that the separator elements / the blades may be spaced from the housing inner wall with variable distance. A minimum distance of the separator elements / the blades to the housing inner wall may be less than 2 mm, preferably less than 1 mm.

The wheel may be fixed to and/or be attached to an axle rotatably arranged in the apparatus. In particular, the wheel may be rotatably arranged in apparatus, preferably in the dosage housing, via two bearings. As an alternative, the wheel may be rotatably arranged on the axle.

The dosage housing may have a cylindrical shape. The dosage housing may also have a cuboid shape. The dosage housing may comprise at least one metal, preferably may be made from the at least one metal. The metal may e.g. be steel. For example, the dosage housing may comprise or be made from aluminum and/or steel. The container may also comprise or may be made from the at least one metal. The container and/or the dosage housing may be made in one piece. In particular, the container together with the dosage housing may be made in one piece. The wheel may also comprise or may be made from the metal. The container and/or the dosage housing and/or the wheel may also comprise a plastic material.

The lever may be coupled to the wheel by a ratchet. The ratchet may comprise a gear and a pawl. The lever may alternatively be coupled to the wheel via a sprag clutch.

The lever may be mounted and/or arranged coaxially with the wheel. The lever may be rotatably arranged on the axle. The lever may be coupled to the axle by the ratchet. The lever may have a lever length between 10 cm and 50 cm, preferably between 15 cm and 30 cm.

The lever may comprise a rod and/or a plate. The rod and/or the plate may be coupled to the wheel such that the lever rotational movement of the lever comprising the rod may be locked with the wheel rotational movement of the wheel in the first rotational direction and unlocked in the second rotational direction. The rod and/or the plate may be rotatably arranged on the axle. The rod and/or the plate may be coupled to the axle by the ratchet.

The lever may also comprise a wrench, in particular a ratchet wrench. The lever and/or the rod and/or the plate may comprise the metal and/or the plastic material.

The lever may comprise a cover plate. The cover plate may be mounted on the axle and/or be fixed to the rod and/or the plate. At least one of the rod, the plate, and the cover plate may be configured to be directly moved by the livestock. In particular, the cover plate and/or the plate may comprise a flat top surface configured to be moved and/or pushed by the livestock. The cover plate may be rotatably arranged on the axle. The cover plate may be loose from the rod of the lever.

The lever may be movable between a first lever position (closed position) and a second lever position (open position). In particular, the lever may be configured to be directly moved by the livestock from the second lever position to the first lever position.

A lever angle between the first lever position and the second lever position may be between 30° and 90°, preferably one of 90°, 72°, 60°, 51.43°, 45°, and 40°. In other words, the lever angle may correspond to one of a quarter rotation (1/4 = 360°/90°), a fifth of a (full) rotation (1/5 = 360°/72°), a sixth of a rotation, a seventh of a rotation, an eighth of a rotation, and a ninth of a rotation, in particular of a rotation of the lever / the wheel.

The first lever position may be provided by a stop configured to prevent the lever rotational movement in the first rotational direction beyond the first lever position.

The stop may be provided in and/or at the apparatus. Alternatively, the stop may be provided by a wall to which the apparatus may be attached.

The raising device may be configured to move the lever to the second lever position. The apparatus may comprise a sensor. The sensor may detect a lever position. The raising device may be configured to stop moving the lever if the lever is detected to be at the second lever position.

The raising device may be configured to move the lever to the second lever position in reaction to detecting the lever being at the first lever position. The lever may be moved immediately or after an offset time (after detecting the lever being at the first lever position). The offset time may for example be between 10 seconds and 12 hours, preferably between 10 seconds and 20 minutes, more preferably between 1 and 5 minutes.

The lever may be configured to remain in the second lever position, preferably due to the counter-momentum from the feed around the wheel being greater than the lever momentum.

The lever may be configured to be unmovable in the second rotational direction towards the second lever position in case the counter-momentum from the feed around the wheel is less than the lever momentum, in particular if the container is empty and/or no feed is supplied by the feed supply unit.

The raising device may comprise a coil spring and a locking device configured to prevent, in a locked state, the lever from moving in the second rotational direction.

The locking device may further be configured to release, in an unlocked state, the lever for moving in the second rotational direction. In the unlocked state, the coil spring may be decompressed such that the lever may be moved into the second lever position. The coil spring may be fixed to the lever at a first end of the coil spring and/or fixed to the stop at a second end of the coil spring. The coil spring may be mounted on the axle. The coil spring may be compressed by the livestock when pushing the lever.

The locking device may comprise a sawtooth wheel (sawtooth gear) and an extendable pin configured to engage the saw tooth wheel. The sawtooth wheel may be rotationally fixed to the lever. In the locked state of the locking device, the pin may be extended such that the pin engages the sawtooth wheel and prevents the sawtooth wheel from rotating in the second rotational direction. Thus, the lever may be prevented from rotating in the second rotational direction. In the unlocked state of the locking device, the pin may be retracted such that the pin does not engage the sawtooth wheel. Thus, in the unlocked state, the sawtooth wheel and the lever may move in the second rotational direction.

The raising device may be a motor, preferably an AC or a DC motor with a voltage between 3 V and 240 V, preferably between 3 V DC and 24 V DC. The motor may more preferably be a 3V DC motor. The apparatus may comprise an electrical source to which the motor may preferably be electrically connected. The electrical source may comprise at least one battery, preferably two AA batteries. Each battery may comprise a terminal voltage between 1.5 V and 3 V. The electrical source may also be a solar cell.

The raising device may be a motor comprising a motor stator coupled to the lever in a rotationally-locked manner and/or a motor rotor coupled to the wheel in a rotationally-locked manner. The motor stator may be fixed to the lever. The motor rotor may be fixed to the axle. The axle may also be part of the motor rotor. I.e., the motor rotor may comprise the axle. The motor rotor may be arranged coaxially with the lever and/or the wheel. The wheel may be fixed to the motor rotor. The motor may be configured to control a relative rotation between the motor stator and the motor rotor. As a result, in case the motor rotor may be blocked from rotating, the motor stator may be rotated (together with the lever).

The lever may be coupled to a generator, which is configured to generate electrical energy when the lever is moved by the livestock in the first rotational direction, preferably from the second lever position to the first lever position.

The lever may be coupled to the generator via a gearbox. The generator and/or the gearbox may be mounted on the axle. As a result, electrical energy may be generated by the generator when the lever is moved by the livestock in the first rotational direction.

The electrical source may be electrically connected to the generator. The electrical source may be chargeable by the generator. The gearbox may be configured to convert a first rotational speed of the lever and/or the wheel to a second rotational speed suitable for the generator.

The apparatus may further comprise a data processing device configured to control the raising device, in particular the motor, to move the lever by one partial rotation, preferably from the first lever position to the second lever position, in reaction to (determining) a number of allowed partial rotations being greater than zero. In case of using the spring coil, the lever may be rotated by one partial rotation by controlling the locking device.

The partial rotation may correspond to moving the lever in the second rotational direction from the first lever position to the second lever position. After the partial rotation of the lever by the motor to the second lever position, the lever (together with the wheel) may be moved back to the first lever position by the livestock. Hence, the partial rotation may also correspond to an opposite partial rotation of the lever and the wheel by the same absolute angle.

The partial rotation may comprise a lever angle being one of 90°, 72°, 60°, 51.43°, 45°, and 40°. Hence, the partial rotation may correspond to one of a quarter rotation, a fifth of a rotation, a sixth of a rotation, a seventh of a rotation, an eighth of a rotation, and a ninth of a rotation (of the lever / the wheel).

The number of allowed partial rotations may be an integer.

The data processing device may be electrically connected to the electrical source and/or the motor. The data processing device may be attached to the container and/or the dosage housing. The data processing device may also be separate from the container and/or the dosage housing. The data processing device may comprise a processor and/or a memory. The number of allowed partial rotations may be stored in the memory.

The data processing device may be configured to carry out incrementing the number of allowed partial rotations after a first time interval and/or decrementing the number of allowed partial rotations in reaction to (and/or after) one lever partial rotation, in particular in reaction to (and/or after) controlling the motor to move the lever by one partial rotation or in reaction to (and/or after) determining the lever being at the first lever position or in reaction (and/or after) detecting the lever to have contacted the stop.

The data processing device may in particular be configured to carry out incrementing the number of allowed partial rotations by one after a first time interval and/or decrementing the number of allowed partial rotations by one in reaction to controlling the motor to move the lever by one partial rotation or in reaction to determining the lever being at the first lever position. An initial number of allowed partial rotations may be zero.

The apparatus may further comprise an input device connected to the data processing device. The input device may for example be a selector switch. The input device may be configured to receive a user input indicative of the first time interval and/or a feed amount per time unit. The input device may be further configured to transmit the user input to the data processing device.

The user input may comprise a total number of partial rotations in a second time interval, in particular, a total number of partial rotations per day. The user input may further be indicative of the lever angle of each partial rotation.

The second time interval may for example be between 24 hours and 96 hours. The total number of partial rotations per day may be an integer, preferably equal to or less than 192, more preferably equal to or less than 48. The first time interval may be between 15 minutes and 12 hours, preferably between 30 minutes and 2 hours.

As a result, the user may accurately control the quantity of provided feed per time unit. Further, the livestock may be fed without fixed feeding times and more continuously, while still having upper bounds on the provided feed per time.

The data processing device may be configured to determine whether the counter-momentum from the feed around the wheel is greater than, equal to, or less than the lever momentum, e.g., via a lever sensor. The data processing device may be further configured to determine whether the container is empty and/or whether no feed is supplied by the feed supply unit, preferably via determining whether the counter-momentum from the feed around the wheel is greater than, equal to, or less than the lever momentum.

The data processing device may be configured to control the locking device. In particular, the data processing device may be configured to switch the locking device between the locked state and the unlocked state.

The data processing device may comprise a transceiver configured to transmit feeding information from the data processing device to an external data processing device, preferably in reaction to the data processing device controlling the motor to move the lever by one partial rotation and/or in reaction to detecting the lever being at the first and/or second lever position.

The feeding information may be transmitted by a wireless network protocol, e.g., by a Sigfox loT protocol, an IEEE-802.11 protocol and/or a mobile device wireless broadband communication protocol such as UMTS or LTE.

The external data processing device may for example be one of a server, a personal computer, and a mobile device such as a mobile phone. The external data processing device may also relate to a server network and/or a cloud network.

The feeding information may comprise at least one of the present number of allowed partial rotations, a timestamp indicative of a time when controlling the motor to move the lever by one partial rotation, a further timestamp indicative of a further time when detecting the lever being at the first lever position, and the offset time.

The transceiver may also be configured to receive the user input from the external data processing device. In case the data processing device, in particular the transceiver is arranged in the apparatus, the transceiver may be arranged in an apparatus portion without metal, e.g., made from plastic. Thus, a Faraday cage effect may be avoided and data reception and transmission may be increased.

An arrangement may be provided, the arrangement comprising the apparatus and a trough configured to store feed and accessible to the livestock.

The embodiments described above in connection with the apparatus for feeding livestock may be provided correspondingly for the method for feeding livestock.

### Description of further embodiments

In the following, embodiments, by way of example, are described with reference to figures.
- Fig. 1a: shows a graphical representation of an apparatus for feeding livestock in a side view.
- Fig. 1b: shows a graphical representation of a wheel in a front view.
- Fig. 2a: shows another graphical representation of the apparatus for feeding livestock in a side view.
- Fig. 2b: shows a graphical representation of the wheel and a lever in a front view.
- Fig. 3a: shows a further graphical representation of the apparatus for feeding livestock in a side view.
- Fig. 3b: shows a further graphical representation of the wheel and the lever in a front view.
- Fig. 4: shows another graphical representation of the apparatus for feeding livestock in a side view.
- Fig. 5a: shows a further graphical representation of the apparatus for feeding livestock in a side view.
- Fig. 5b: shows a graphical representation of a cover plate in a diagonal view.
- Fig. 6a: shows a further graphical representation of the apparatus for feeding livestock in a side view.
- Fig. 6b: shows a graphical representation of the apparatus for feeding livestock in a front view.
- Fig. 7: shows a graphical representation of an arrangement comprising the apparatus for feeding livestock in a side view.
- Fig. 8a: shows a graphical representation of another embodiment of the apparatus for feeding livestock in a side view.
- Fig. 8b: shows a graphical representation of the wheel and the lever of the other embodiment in a front view.
- Fig. 9: shows another graphical representation of other embodiment of the apparatus for feeding livestock in a side view.

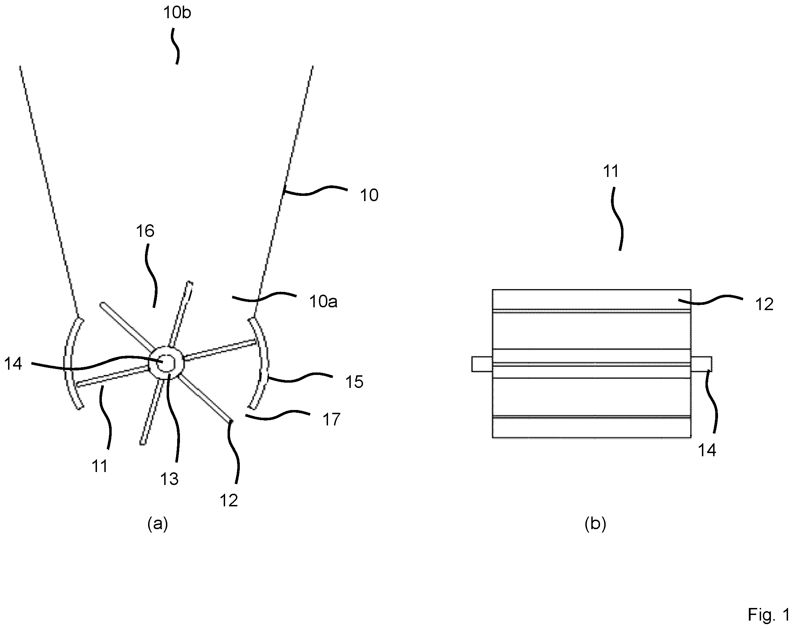

In Fig. 1a, a graphical representation of an apparatus 1 for feeding livestock in a side view is shown; and in Fig. 1b, a graphical representation of a wheel 11 in a front view is shown. The apparatus 1 comprises a feed supply unit / container 10 for storing feed for livestock with a first opening 10a and a second opening 10b. The wheel 11, in the shown embodiment a blade wheel 11, is rotatably arranged at the first opening 10a. The blade wheel 11 comprises blades 12 arranged around a body 13 of the blade wheel 11.

Between two adjacent blades 12 extends a space forming one dosage cell 16 in which the feed can be received.

The blade wheel 11 is fixed on an axle 14 that is rotatably arranged in a dosage housing 15 at the first opening 10a of the container 10. The blade wheel 11 rotates with the axle 14. The blade wheel 11 is arranged in the dosage housing 15 such that the blades 12 can rotate within the dosage housing 15 in a form-fitting manner. In particular, the dosage housing 15 can at least partially laterally cover at least one of the dosage cells 16. At its bottom, the dosage housing 15 comprises a discharging opening 17.

By rotating the blade wheel 11, the feed in the container 10 is received in the dosage cells 16 facing the container 10 (at the first opening 10a) and discharged from the dosage cells 16 at the discharging opening 17. If the blade wheel 11 is prevented from rotating, no further feed can be received in and discharged from the dosage cells 16.

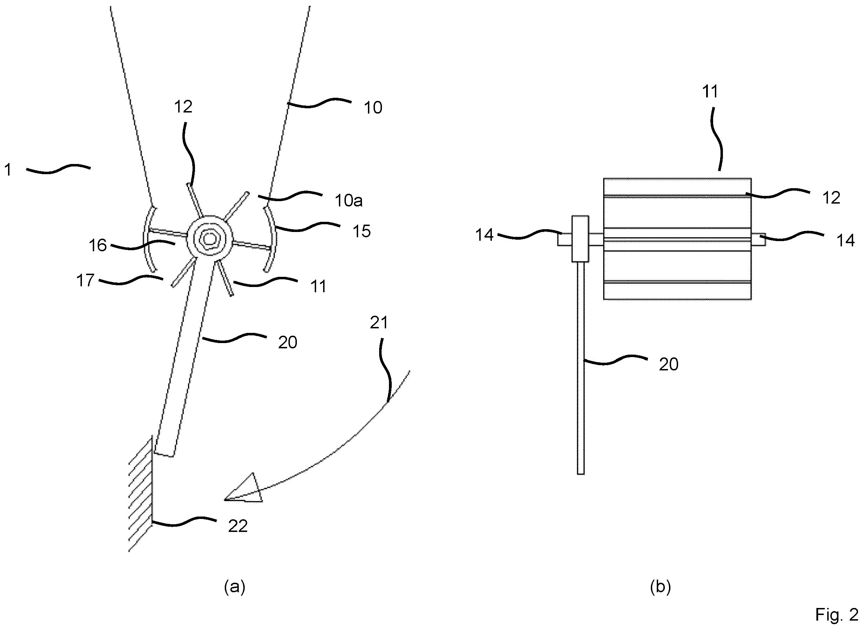

Fig. 2a shows a graphical representation of the apparatus 1 for feeding livestock in a side view and Fig. 2b shows another graphical representation of the wheel / blade wheel 11 and a lever 20 in a front view.

The lever 20 may be rotatably mounted on the axle 14. The lever 20 is coupled to the blade wheel 11 in such a way that in a first rotational direction 21 (e.g., clockwise), the lever 20 moves together with the blade wheel 11, and in a second rotational direction 40 (e.g., counter-clockwise), the lever 20 moves without the blade wheel 11 moving. In other words, the lever 20 is coupled to the blade wheel 11 such that a lever rotational movement of the lever 20 is locked with a wheel rotational movement of the blade wheel 11 in the first rotational direction and unlocked in the second rotational direction. The lever 20 may comprise a rod or a plate. The lever 20 may also comprise a ratchet wrench.

A direction-dependent locking of the lever rotational movement and the wheel rotational movement can for example be carried out by coupling the lever 20 (e.g. via the axle 14) with the blade wheel 11 by a ratchet or by a sprag clutch.

The livestock may push the lever 20 in the first rotational direction 21 up to a first lever position (closed position) at which it is blocked from further movement in the first rotational direction 21, e.g., by a stop such as a wall 22. The stop may also be provided within the apparatus 1, in particular, within the dosage housing 15. As a result from pushing the lever 20, the blade wheel 11 is rotated and feed is discharged from the dosage cells 16 of the blade wheel 11 at the discharging opening 17. As soon as the lever 20 reaches the closed position, no more food can be discharged. Further, the lever 20 cannot be moved back from the closed position by the livestock.

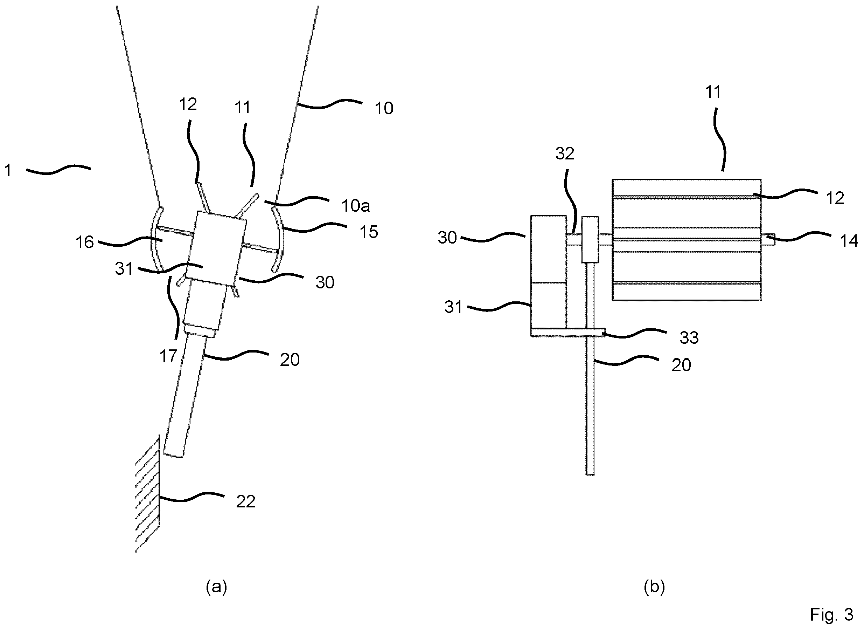

Fig. 3a shows a further graphical representation of the apparatus 1 for feeding livestock in a side view and Fig. 3b shows a further graphical representation of the wheel / blade wheel 11 and the lever 20 in a front view. A motor 30 is coupled to the lever 20 and is configured to move the lever 20 in the second rotational direction, i.e., counter-clockwise.

The motor 30 comprises a motor stator 31 and a motor rotor 32. The motor stator 31 is fixed to the lever 20 (for example, via an arm 33), while the motor rotor 32 is fixed to the axle 14. The motor 30 is for example a 3V DC electric motor that is electrically connected to a battery or a solar cell (not shown).

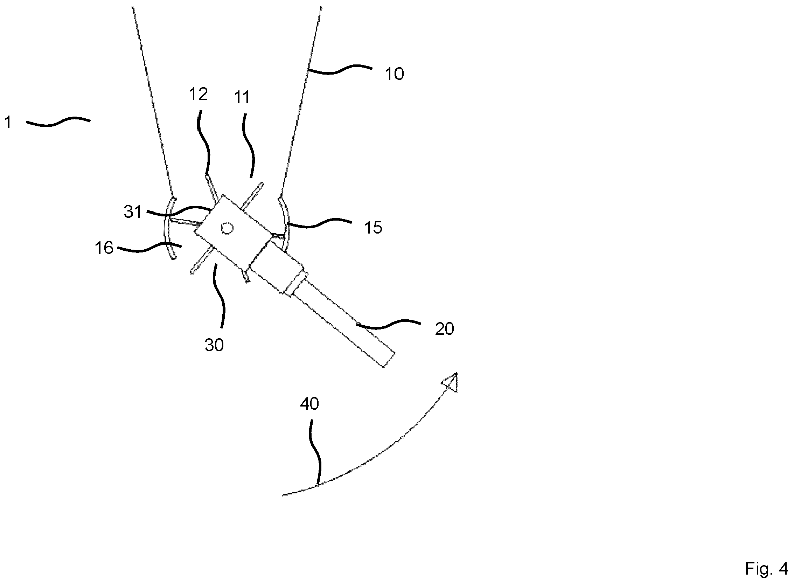

Fig. 4 shows another graphical representation of the apparatus 1 for feeding livestock in a side view. When the motor 30 is turned on, the motor rotor 32 itself does not rotate since the blade wheel 11, to which the motor rotor 32 is fixed via the axle 14, is sufficiently rotationally blocked by the feed around the blades 12 at the first opening 10a. In particular, a counter-momentum by the feed around the blades 12 is greater than a lever momentum dependent on the (angular) mass of the lever 20 (and the motor stator 31). As a result, the lever 20 and the motor stator 31 are rotated by the motor 30 in the counter-clockwise second rotational direction 40.

A sensor (not shown) may detect a lever position of the lever 20 and the motor stator 31. If by moving the lever 20 in the counter-clockwise direction 40 the lever 20 reaches a predetermined second lever position, the motor is turned off, e.g., by a switch (not shown). A lever angle between the first lever position and the second lever position may, e.g., be 60°. In other words, by moving from the first lever position to the second lever position, the lever 20 traverses a lever angle of 60° / a partial rotation of 60°.

The livestock must apply a momentum greater than the counter-momentum by the feed at the blade wheel 11 (minus the lever momentum in order to move the lever 20 from the second lever position back.

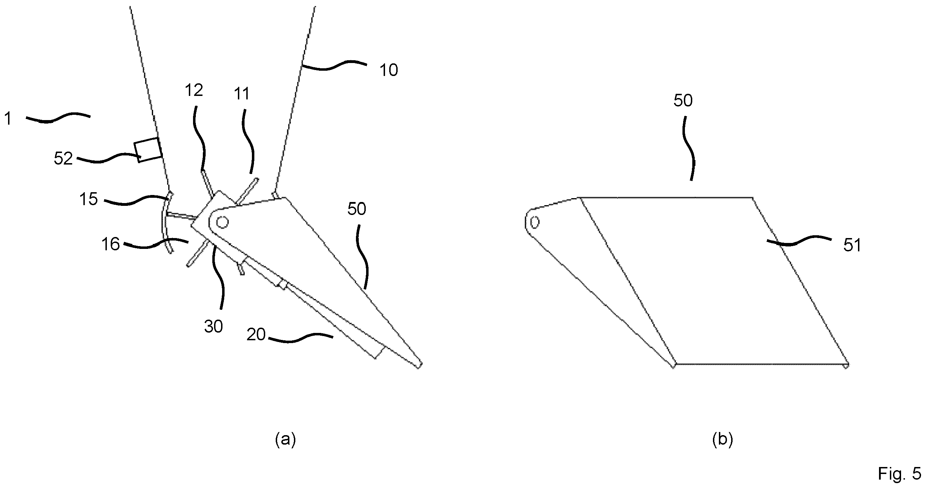

Fig. 5a shows a further graphical representation of the apparatus 1 comprising a cover plate 50 as part of the lever 20 for feeding livestock in a side view. Fig. 5b shows a graphical representation of the cover plate 50 in a diagonal view. The cover plate comprises a flat top surface 51, via which the livestock can directly push the lever 20 in order to turn the wheel blade 11. Further, a data processing device 52 is provided that is configured to control the motor 30 to move the lever 20 by one partial rotation in reaction to a number of allowed partial rotations being larger than zero.

The data processing device 52 may for example be attached to the container 10 or the dosage housing 15. The data processing device 52 may also be separate from the container 10 and the dosage housing 15. The data processing device 52 is electrically connected to the battery.

The energy consumption may be low in that the data processing device (using 3V DC) may consume about 1000 mAh per year. The motor 30 (also using 3V DC), operates along only a small angle for a couple a seconds in order to lift the lever 20 (having a weight of about 100 grams). The energy consumption of the motor 30 is hence expected to be less than 1000 mAh per year. Thus, two AA batteries should be sufficient for one year.

The data processing device 52 is configured to carry out incrementing the number of allowed partial rotations by one after a first time interval and decrementing the number of allowed partial rotations by one after controlling the motor 30 to move the lever 20 by one partial rotation. For example, the number of allowed partial rotations may be incremented by one every 30 minutes. For example, if the number of allowed partial rotations at a certain point in time is 2, the number of allowed partial rotations after 30 minutes is 3, and the number of allowed partial rotations after 60 minutes is 4.

Via a selector switch electrically connected to the data processing device 52, a user can adjust the total number of allowed partial rotations that the motor 30 may at most carry out within a fixed second time interval, e.g., within a day / 24 hours. This total number determines the length of the first time interval. If the user for example determines the total number to be 48 (i.e. 48 allowed partial rotations per 24 hours), the first time interval is 30 minutes, corresponding to 24 h / 0.5 h = 48 partial rotations in 24 hours. In case the total number of allowed partial rotations per 24 hours is 72, the first time interval is 24 h / 72 = 20 min.

If one partial rotation corresponds to an angle of 60° / a sixth of a full rotation of the wheel, 48 partial rotations correspond to 48 / 6 = 8 full rotations of the wheel. If the wheel e.g. comprises 5 dosage cells, a feed amount corresponding to a volume of 5 * 8 dosage cells will maximally be discharged within 24 hours.

As a result, the user can accurately control the quantity of provided feed per time unit. Moreover, a more nature-like feeding of livestock can be carried out. Namely, herbivorous animals in nature generally feed continuously, day and night. As such animals regularly represent prey, they only sleep for short time periods. In particular horses and cattle often are fed only twice a day, once in the morning and once in the evening, which is unfavorable in that too large amounts are provided and quickly eaten, while the animals subsequently may get passive and/or experience twitches (such as convulsive and/or involuntarily repeated brief movements). Further, digestive diseases including ulcers may arise. Moreover, in case feeding takes place at regular intervals (even more than twice a day), the animals may become nervous or stressed before the feeding.

With the disclosed apparatus 1, as in nature, there are no fixed feeding hours. The livestock may access feed at will, day and night. As a result, stress and health risks may be reduced, in particular regarding competition horses (for racing or jumping) that need to be athletic and slim.

At the same time, maintenance may be limited to regularly filling the container 10 (for instance, about once a week for one horse if the container volume is 20 liters) and to changing the batteries roughly every 6 months. No further wiring and no access to a power grid is required. Thus, the apparatus 1 can also be installed in remote areas. The force of the animal is used for operating the wheel and distributing the feed, reducing the required electrical energy for maintaining the apparatus.

The data processing device 52 further comprises a transceiver for transmitting feeding data to the user, who can thus follow live each time the animal obtains feed. The apparatus can be produced economically and can be easily transported and installed.

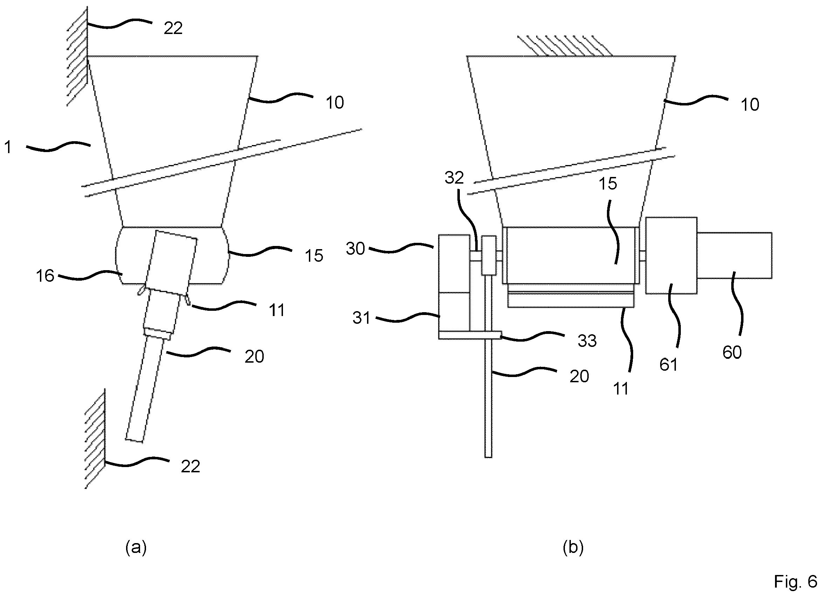

Fig. 6a shows a further graphical representation of the apparatus 1 for feeding livestock in a side view and Fig. 6b shows a graphical representation of the apparatus 1 for feeding livestock in a front view. A generator 60 may be coupled to the lever 20 via a gearbox 61. The generator 60 and/or the gearbox 61 may be connected to the axle 14. As a result, electrical energy is generated by the generator 60 when the lever 20 is moved by the livestock in the first rotational direction 21 from the second lever position to the first lever position.

The electrical source may be electrically connected to the generator 60 and be charged by the generator 60. The gearbox 61 is configured to convert a first rotational speed of the lever 20 and/or the wheel 11 to a second rotational speed suitable for the generator 60.

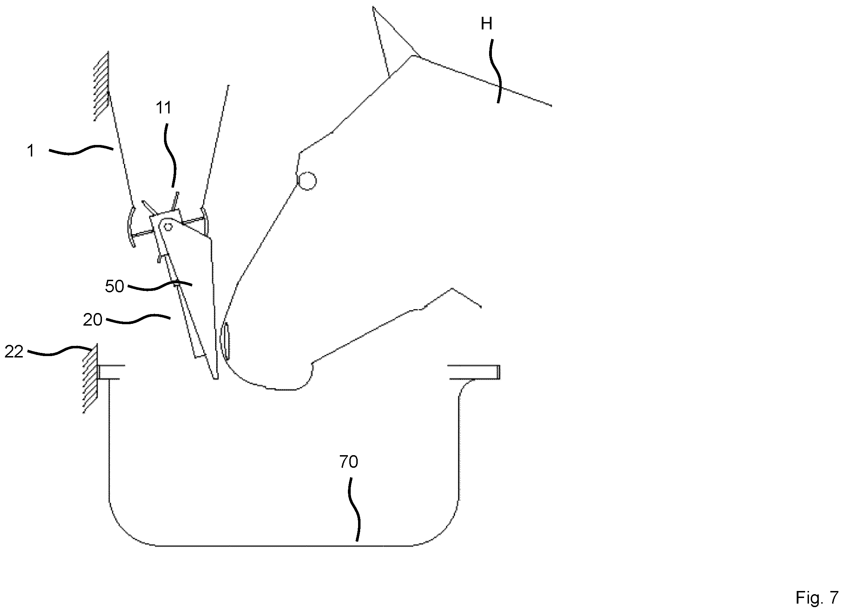

Fig. 7 shows a graphical representation of an arrangement comprising the apparatus 1 for feeding livestock and a trough 70 in a side view. The trough 70 is configured to store feed and is accessible to the livestock, which in Fig. 7 is a horse H. The lever 20 comprising the cover plate 50 is moved by the horse H. As a result of moving the lever 20, feed is dispensed into the trough 70. The trough 70 may be attached to the wall 22.

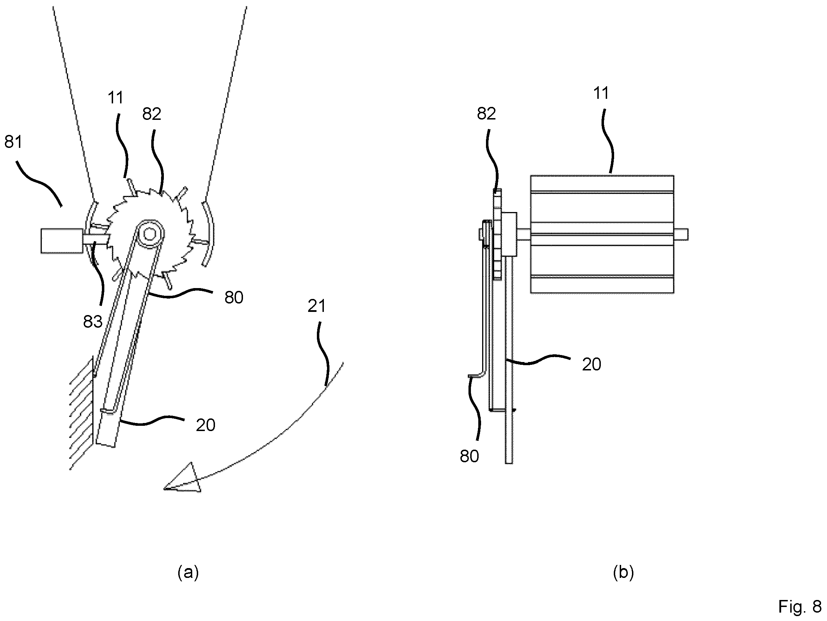

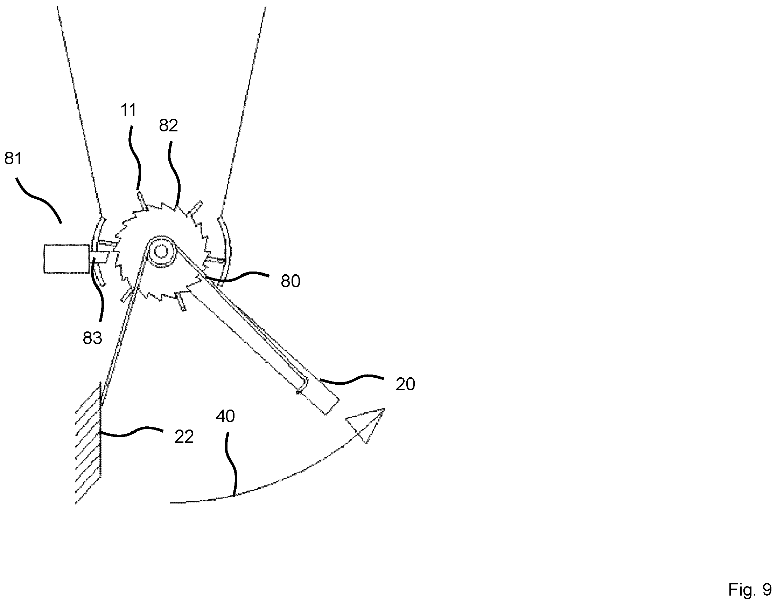

Fig. 8a shows a graphical representation of another embodiment of the apparatus 1 for feeding livestock in a side view and Fig. 8b shows a graphical representation of the wheel 11 and the lever 20 in a front view. Fig. 9 shows another graphical representation of the other embodiment of the apparatus 1 for feeding livestock in a side view.

In the shown embodiment, a coil spring 80 is employed instead of the motor 30. The coil spring 80 is fixed to the lever 20 at a first end of the coil spring 80 and fixed to the stop (and/or the apparatus 1), in particular the wall 22, at a second end of the coil spring 80. The coil spring 80 is mounted on the axle 14. The coil spring 80 is compressed by the livestock when pushing the lever 20. A locking device 81 is configured to prevent, in a locked state (Fig. 8a), the lever 20 from moving in the second rotational direction 40. The locking device 81 is further configured to release, in an unlocked state (Fig. 9), the lever 20 for moving in the second rotational direction 40. In the unlocked state, the coil spring 80 will be decompressed such that the lever 20 is moved into the second lever position.

The locking device 81 is controlled by the data processing device 52 and can be switched by the data processing device 52 between the locked state and the unlocked state.

The locking device 81 comprises a sawtooth wheel / sawtooth gear 82 and an extendable pin 83 interacting with the saw tooth wheel 83. The sawtooth wheel 83 is rotationally fixed to the lever 20. In the locked state of the locking device 81, the pin 83 is extended such that it engages the sawtooth wheel 83 and prevents the sawtooth wheel 83 and thus the lever 20 from rotating in the second rotational direction 40. In the unlocked state of the locking device 81, the pin 83 is retracted such that it does not engage the sawtooth wheel 83. Thus, the sawtooth wheel 83 and the lever 20 can rotate in the second rotational direction 40.

By using the spring 80, less electrical energy is required. On the other hand, by using the motor 30, less force is required for the livestock to push the lever 20. Further, the lever 20 may be moved back to the second lever position by the motor 30 in a more controlled manner.

In another embodiment, a counterweight is positioned (by a small further motor) above the lever 20, moved in a third direction in order to raise the lever 20 (along the second rotational direction 40) and moved in a forth direction in order to move the lever 20 into the first lever position against the stop / the wall 22. As a result, less electrical energy is required.

The features disclosed in this specification, the figures and/or the claims may be material for the realization of various embodiments, taken in isolation or in various combinations thereof.

## Claims

1. Apparatus (1) for feeding livestock, comprising:
- a feed supply unit (10) configured to supply feed and at a first opening (10a);
- a wheel (11) rotatably arranged at the first opening (10a) and comprising a plurality of dosage cells (16) configured to receive and discharge the feed;
- a lever (20) configured to be directly moved by a livestock and coupled to the wheel (11) such that a lever rotational movement of the lever (20) is locked with a wheel rotational movement of the wheel (11) in a first rotational direction (21) and unlocked in a second rotational direction (40); and
- a raising device (30; 80) coupled to the lever (20) and configured to move the lever (20) in the second rotational direction (40).

2. Apparatus (1) according to claim 1, wherein the lever (20) is movable in the second rotational direction (40) using a counter-momentum from the feed around the wheel (11).

3. Apparatus (1) according to claim 1 or 2, wherein the lever (20) is coupled to the wheel (11) by a ratchet.

4. Apparatus (1) according to one of the preceding claims, wherein the lever (20) is mounted coaxially with the wheel (11).

5. Apparatus (1) according to one of the preceding claims, wherein the lever (20) comprises a cover plate (50).

6. Apparatus (1) according to one of the preceding claims, wherein the lever (20) is movable between a first lever position and a second lever position.

7. Apparatus (1) according to claim 6, wherein a lever angle between the first lever position and the second lever position is between 30° and 90°, preferably one of 90°, 72°, 60°, 51.43°, 45°, and 40°.

8. Apparatus (1) according to claim 6 or 7, wherein the first lever position is provided by a stop configured to prevent the lever rotational movement in the first rotational direction (21) beyond the first lever position.

9. Apparatus (1) according to one of the preceding claims, wherein the raising device (30;
80) comprises a coil spring (80) and a locking device (81) configured to prevent, in a locked state, the lever (20) from moving in the second rotational direction (40).

10. Apparatus (1) according to one of the preceding claims, wherein the raising device (30;
80) is a motor (30) comprising a motor stator (31) coupled to the lever (20) in a rotationally-locked manner and a motor rotor (32) coupled to the wheel (11) in a rotationally-locked manner.

11. Apparatus (1) according to one of the preceding claims, wherein the lever (20) is coupled to a generator (60), which is configured to generate electrical energy when the lever (20) is moved by the livestock in the first rotational direction (21).

12. Apparatus (1) according to one of the preceding claims, further comprising a data processing device (52) configured to control the raising device (30; 80) to move the lever (20) by one partial rotation in reaction to a number of allowed partial rotations being greater than zero.

13. Apparatus (1) according to claim 12, wherein the data processing device (52) is further configured to carry out:
- incrementing the number of allowed partial rotations after a first time interval and
- decrementing the number of allowed partial rotations in reaction to one lever partial rotation.

14. Apparatus (1) according to claim 12 or 13, wherein the data processing device (52) comprises a transceiver configured to transmit feeding information from the data processing device to an external data processing device.

15. Method for feeding livestock using an apparatus (1) according to one of the preceding claims, the method comprising:
- moving, by a livestock, the lever (20) in the first rotational direction (21) such that the wheel (11) is moved in the first rotational direction (21);
- discharging the feed from the at least one dosage cell (16) by moving the wheel (11); and
- moving, by the raising device (30; 80), the lever (20) in the second rotational direction (40) from a first lever position to a second lever position.

## Amended claims

### Amended claims in accordance with Rule 137(2) EPC.

1. Apparatus (1) for feeding livestock, comprising:
- a feed supply unit (10) configured to supply feed and at a first opening (10a);
- a wheel (11) rotatably arranged at the first opening (10a) and comprising a plurality of dosage cells (16) configured to receive and discharge the feed;
- a lever (20) mounted coaxially with the wheel (11) and configured to be directly moved by a livestock and coupled to the wheel (11) such that a lever rotational movement of the lever (20) is locked with a wheel rotational movement of the wheel (11) in a first rotational direction (21) and unlocked in a second rotational direction (40); and
- a raising device (30; 80) coupled to the lever (20) and configured to move the lever (20) in the second rotational direction (40), wherein the raising device (30; 80) is a motor (30) comprising a motor stator (31) coupled to the lever (20) in a rotationally-locked manner and a motor rotor (32) coupled to the wheel (11) in a rotationally-locked manner.

2. Apparatus (1) according to claim 1, wherein the lever (20) is movable in the second rotational direction (40) using a counter-moment from the feed around the wheel (11).

3. Apparatus (1) according to claim 1 or 2, wherein the lever (20) is coupled to the wheel (11) by a ratchet.

4. Apparatus (1) according to one of the preceding claims, wherein the lever (20) comprises a cover plate (50).

5. Apparatus (1) according to one of the preceding claims, wherein the lever (20) is movable between a first lever position and a second lever position.

6. Apparatus (1) according to claim 5, wherein a lever angle between the first lever position and the second lever position is between 30° and 90°, preferably one of 90°, 72°, 60°, 51.43°, 45°, and 40°.

7. Apparatus (1) according to claim 5 or 6, wherein the first lever position is provided by a stop configured to prevent the lever rotational movement in the first rotational direction (21) beyond the first lever position.

8. Apparatus (1) according to one of the preceding claims, wherein the raising device (30; 80) comprises a coil spring (80) and a locking device (81) configured to prevent, in a locked state, the lever (20) from moving in the second rotational direction (40).

9. Apparatus (1) according to one of the preceding claims, wherein the lever (20) is coupled to a generator (60), which is configured to generate electrical energy when the lever (20) is moved by the livestock in the first rotational direction (21).

10. Apparatus (1) according to one of the preceding claims, further comprising a data processing device (52) configured to control the raising device (30; 80) to move the lever (20) by one partial rotation in reaction to a number of allowed partial rotations being greater than zero.

11. Apparatus (1) according to claim 10, wherein the data processing device (52) is further configured to carry out:
- incrementing the number of allowed partial rotations after a first time interval and
- decrementing the number of allowed partial rotations in reaction to one lever partial rotation.

12. Apparatus (1) according to claim 10 or 11, wherein the data processing device (52) comprises a transceiver configured to transmit feeding information from the data processing device to an external data processing device.

13. Method for feeding livestock using an apparatus (1) according to one of the preceding claims, the method comprising:
- moving, by a livestock, the lever (20) in the first rotational direction (21) such that the wheel (11) is moved in the first rotational direction (21);
- discharging the feed from the at least one dosage cell (16) by moving the wheel (11); and
- moving, by the raising device (30; 80), the lever (20) in the second rotational direction (40) from a first lever position to a second lever position.
